# EUROPEAN PATENT APPLICATION

(11) **EP 3 683 413 A1**
(43) Date of publication of application: **22.07.2020**
(21) Application number: 19152609.4
(22) Date of filing: 18.01.2019
(51) Int. Cl.: F01N 3/04

(54) **A SYSTEM AND A METHOD FOR REMOVAL OF SOX FROM EXHAUST GAS**

(71) Applicant: CRR Denmark ApS, 7100 Vejle (DK)
(72) Inventor: Gludsø, Peter, 7100 Vejle (DK); Gludsø, Michael, 02-958 Warszaw (PL)
(74) Representative: Plougmann Vingtoft a/s

(57) **Abstract**

A system and a method for removal of SOx and particulate matters from exhaust gas from a from marine diesel engines (1). By injecting a sodium based sorbent material in the exhaust gas (2), the sulphur oxides reacts in the exhaust gas and the filter units (10) captures the residue including particles such soot and micro pollutants. Filter units will build a cake of residue that will be cleaned regularly (15) and stored (11).

## Description

### FIELD OF THE INVENTION

The present invention relates to a method and a system for purification of exhaust gas from marine diesel engines.

In particular, the invention relates to a method and a system for removal of SOₓ and particulate matters from exhaust gas from diesel engines, such as marine diesel engines.

### BACKGROUND OF THE INVENTION

Air Pollution is a critical problem of our age. Thousands of people suffer premature deaths annually, while many more are hospitalized each year.

According to the European Environmental Agency (EEA), around 90 % of city dwellers in the European Union (EU) are exposed to some of the most damaging air pollutants, at levels deemed harmful to health by the World Health Organization (WHO). These pollutants have been identified as particulate matter (PM) and ground-level ozone (O₃).

According to the United States environmental protection agency (EPA), Cross-State Air Pollution Rule will protect communities that are home to 240 million Americans from smog and soot pollution, preventing up to 34,000 premature deaths, 15,000 nonfatal heart attacks, 19,000 cases of acute bronchitis, 400,000 cases of aggravated asthma, and 1.8 million sick days a year beginning in 2014 - achieving up to $280 billion in annual health benefits.

Addressing the challenges of city pollution, e.g. New York city, where a high percent of buildings are heated by burning heavy fuel oils from oil heat boilers is crucial for the survival of our planet.

Furthermore, also at sea, ship owners are also confronting huge challenges in reducing emission of particulates and sulphur from ships exhaust gases according to international legislation.

For example, as of January 1, 2015, the International Maritime Organization (IMO) mandated that all vessels sailing within the Sulphur Emission Control Area (SECA), while using Marine Gas Oil (MGO), must use a maximum sulphur content of 0.1%.

Vessels are permitted to install abatement technologies, which reduce sulphur oxide (SOₓ) emissions to an equivalent.

SOₓ (mainly SO₂, some SO₃) originates from the combustion of sulphurous compounds in the fuel oil (HFO). Typically, HFO is used due to lower price than other fuels with lower Sulphur levels such as marine diesel. Heavy fuel oil also contains the largest amounts for sulphurous compounds (typically 3.5% by weight) and therefore causes the largest emission of SOₓ.

Unburned carbon particles and gases from a marine diesel engine, such as sulphur dioxide, which often accompany soot production, can have an aerosol cooling effect, because in the atmosphere they can deflect heat from the sun back into space.

The international Maritime Organisation has allowed ships to continue to use HFO provided that they are using scrubbers to remove SOₓ.

Current scrubber technology available uses seawater to clean the exhaust and the open loop version discharge the wash water that includes sulphates and other components from HFO combustion back into the sea. Harbours around the globe are looking into a potential ban of open loop scrubbers and Singapore's Maritime Port Authority (MPA) is one of the first to ban the use of open loop wet scrubbers in port.

As of 2016, new vessels are to implement abatement technologies reducing mono-nitrogen oxides (NOₓ), according to the IMO Tier III legislation.

Moreover, in a drive to convert power generation from fossil to sustainable fuels, many new power plants across Europe are based on burning wood chips and straw. While sulphur oxide (SOₓ) and carbon dioxide (CO₂) emissions from biomass are lower than from fossil fuels, particulate matter (PM) and black carbon (BC) emissions are higher.

Particulates are the deadliest form of air pollution due to their ability to penetrate deep into the lungs and blood streams unfiltered, which causes permanent DNA mutations, heart attacks and premature death.

In 2013, a Danish study involving 312,944 people in nine European countries revealed that there were no safe level of particulates and that for every increase of 10 µg/m³ in PM10, the lung cancer rate rose 22%.

The smaller PM2.5 were particularly deadly, with a 36% increase in lung cancer per 10 µg/m3 as it can penetrate deeper into the lungs. At the same time, scientific research deems black carbon as the second most important factor for climate change after CO₂.

However, none of the current solutions can efficiently and at low cost be adapted to any of these uses, i.e. on land or at sea. Indeed flue gas originated from oil heat boilers used for heating, e.g. constant productions of gas having the same characteristics during the hours of the day while a building is heated, do not have the same dynamic as the one originated from a vessel engine, e.g. due to change of speed of the vessel according to sea conditions, vessel location or cost reductions.

In that, there is a need for a highly efficient, low cost filtering system for flue gas to address the current environmental and public health threats.

In particular, there is a need for an exhaust gas cleaning system that can be installed in new and existing vessels, buildings or power plants as retrofit for removing SOₓ, PM and BC.

Hence, an improved filtering system that is able to be adapted to the changes, e.g. in compositions, flow speed, temperature and pressure, in flue gas emission through its use would be advantageous.

An improved filtering system that could be modularly built, is easy to implement and has low complexity, hence which can be installed on small ships, would also be advantageous.

A more efficient and reliable method to operate the improved filtering system would be also advantageous.

### OBJECT OF THE INVENTION

An object of the present invention is to provide a system and a method for removal of SOₓ and particulate matters from exhaust gas from marine diesel engines.

In particular, it may be seen as a further object of the present invention to provide a system and a method for removal of SOₓ and particulate matters from exhaust gas from marine diesel engines, which solves the above mentioned problems of the prior art with a predetermined series of filtering steps of the exhaust gas.

It is an object of the present invention to wholly or partly overcome the above disadvantages and drawbacks of the prior art. More specifically, it is an object of the present invention to avoid or at least reduce pollution, including sea water pollution, produced by current scrubber systems employed in treatment of exhaust gas from marine diesel engines.

Another object of the present invention is to provide an alternative to the prior art.

### SUMMARY OF THE INVENTION

Thus, the above described object and several other objects are intended to be obtained in a first aspect of the invention by providing an emission reduction filtering system for maritime use, the system comprising: a first infusion system, such as a dynamic infusion system; one or more sensors; a controller; a filtering unit; wherein the first infusion system comprises at least two injection means for injecting one or more alkaline compounds.
Maritime use is defined as use at sea, for example use in watercraft vehicles.

The one or more alkaline compounds may comprise alkaline chemical compounds such as NaHCO₃.

NaHCO₃, i.e. Sodium Bicarbonate or sodium hydrogen carbonate also referred to as baking soda, may be injected or added in its solid form or in aqueous solution at different concentration.

For example, an aqueous solution having a concentration between 0.01 to 1 M of NaHCO₃ may be used.

Thus, the system and method of the invention main idea is to remove SOₓ and particulate matters from exhaust gas from marine diesel engines through a controlled injection of sodium based sorbent material in the exhaust gas at predetermined concentration and at a different stages to ensure optimal removal of sulphur oxides and capture of residue including particles, such as soot and micro pollutants.

Exhaust gas may also be referred herein as flue gas.

In some embodiments, the at least two injection means comprise a first injection valve and a second injection valve.

The at least two injection means may comprise injection valves.

However, other injection means suitable for delivering alkaline chemical compounds may also be employed in the system.

In some embodiments, the first injection valve is located at an exhaust outlet of a diesel engine.

The first injection of alkaline chemical compounds at an exhaust outlet of a diesel engine has the function of drastically reducing the SOₓ present in the exhaust gas due to the reaction between the alkaline absorbent and the acid sulphur oxides gas.

In some further embodiments, the second injection valve is configured to expose the filtering unit to the one or more alkaline compounds.

Thus, the second injection valve may be located before the filtering unit, thereby allowing for treatment of the filtering unit.

The presence of the second injection valve before the filtering unit allows for precoating of the filtering unit before operation and allows for eventual addition of alkaline compounds during operation.

The injection of alkaline compounds through the second injection valve has the purpose of coating the filtering unit so that removal of SOₓ contained in the exhaust gas can be achieved during operation.

The alkaline compounds react shortly after the first injection in the hot exhaust gas pipe system. However, not all SOₓ is removed.

The rest of the SOₓ is captured on the filter surface material.

In some embodiments, the emission reduction filtering system may further comprise a boiler located between the first injection valve and the second injection valve.

The boiler or economizer produces warm water through heat exchange with the hot exhaust gas. As a result of that, warm water is produced while the temperature of the exhaust gas is reduced.

In some other embodiments, the emission reduction filtering system further comprises a bypass valve between the boiler and the second injection valve.

The bypass valve allows the exhaust gas to bypass the filtering unit. During normal operation, the exhaust gas passes through the filtering unit to further reduce its content of SOₓ and particulate matter. When regeneration of the filter unit is required, the bypass valve redirects the flow of the exhaust towards the exhaust stack so that regeneration of the filtering unit via injection of alkaline compounds through the second injection valve may occur.

In some embodiments, the filtering unit comprises cyclonic separation means, such as a cyclone.

Centrifuges, dust collectors or particle collectors may also be used as cyclonic separation means.

The filtering unit has thus both the function of separating larger particles from the exhaust gas and to support and increase the surface area for the reaction between the alkaline compounds and the exhaust gas.

In some further embodiments, the filtering unit comprises filtering cartridges, such as ceramic, cloth or Kevlar based cartridges.

The filtering or filter cartridges may be coated to be heat resistant and to withstand the different workloads of the diesel engine.

The filter cartridges are designed to avoid water condensation as water condensation may cause clogging and therefore reduce filtering efficiency.

The filtering unit may further comprise insulation means, such as thermal insulation and/or sound insulation materials.

In some embodiments, the one or more sensors comprise pressure sensors.

In some embodiments, the one or more sensors comprise temperature sensors.

In some other embodiments, the one or more sensors comprise gas flow sensors.

Gas flow sensors may sense speed and/or volume of the exhaust gas flowing through the sensors.

The one or more sensors may comprise chemical composition sensors.

The one or more sensors are located within the system in different location so as to monitor temperature, pressure, gas flow and chemical composition through the system.

Indeed, in some embodiments, the controller is adapted to control the first infusion system based on the feedback from the one or more sensors. Importantly, the one or more sensors provide feedback in relation to the measured parameters to the controller that will modify operational procedures based on that feedback.

During operation, upon receiving feedback from the one or more sensors, the controller may control injection and operate, such as activate or shut down, a valve, such as a bypass valve.

In some embodiments, at least one pressure, temperature and gas flow sensor of the one or more sensors are located at the exhaust of a diesel engine.

These sensors provide information on the properties of the exhaust gas at the exhaust outlet of a diesel engine. This information can be used by the controller to evaluate whether actions are needed before the injections of alkaline compounds by the first injection valve or whether the injected dose should be modified depending on the properties of the exhaust gas.

In some further embodiments, at least one pressure, temperature and gas flow sensor of the one or more sensors are located at an inlet of the filtering unit.

Data collected at the inlet of the filtering unit can also be used to regulate the treatment within the filtering unit through the controller.

The controller may be a proportional-integral-derivative (PID) controller.

The system is operated through a control loop feedback mechanism. The controller upon receiving information from the sensors located within the system controls the injection system i.e. reducing or increasing infusion of the alkaline compounds.

The controller or central control system may also operate the emission reduction filtering system upon receival of GPS coordinates that are associated to an optimal mode of operation depending on different geographical regulations.

The dosage of alkaline compounds may be adjusted depending on the geographical position and in order to comply with the allowed emission level of the geographical area of interest.

Operational steps may be different depending on the location, i.e. in harbour or open sea.

Based on the ships GPS position, SOₓ measuring unit, engine load, exhaust temperature, exhaust flow, the controller communicates with the dosing unit, heat reducing fan and pressure in the filter cartridges and adjust dosing and cleaning.

Access to the controller may also be attained remotely to offer support, predict maintenance and plan logistics for delivery of alkaline compounds and handling of filtering unit residue.

The emission reduction filtering system may further comprise means for avoiding or at least reducing particle aggregation of the one or more alkaline compounds, such as pneumatic hammers or air infusion nozzles.

Conditions at sea such as humidity and movements favour aggregation of the alkaline compounds and of the residue.

Means for avoiding or at least reducing particle aggregation of the one or more alkaline compounds are positioned around the one or more alkaline compounds containers within the system.

For example, pneumatic hammers may be present within the silos or at the inlet or outlet of the silos containing the alkaline compounds and/or the filter unit residues.

Alternatively or in combination with the means mentioned above, air impulse injectors and screw conveyors may be used.

In case of use of compressed air, it is important to dry the air used before infusion to avoid condensation and additional humidity.

In some further embodiments, the emission reduction filtering system further comprises a second infusion system for injecting water vapour.

Addition or injection of water vapour or moist may occur at different stage within the system.

In some embodiments, the injection of water vapour may be carried out by the first infusion system.

The addition of moist has the advantage of improving the efficiency of reaction between the alkaline compounds and the exhaust gas.

In second aspect, the invention relates to a method of operating the emission reduction filtering system according to the first aspect of the invention, the method comprising: injecting the alkaline compounds into the filtering unit through the second injection valve, thereby coating the filtering unit cartridges with the alkaline compounds.

One of the main advantages of the system and the method of the invention is that it can adapt to the dynamics required by ship diesel engines.

Ship diesel engines are rather different from in land burners, as have different operational dynamics. The system and method of the invention easily adapt its operational steps to the one required by the engine as well as the one required by the environmental requirements of the geographical location of the engine, thus efficiently removing or at least reducing SOₓ and particle emission.

The first, second and other aspects and embodiments of the present invention may each be combined with any of the other aspect or embodiment. These and other aspects and embodiments of the invention will be apparent from and elucidated with reference to the embodiments described hereinafter.

### BRIEF DESCRIPTION OF THE FIGURES

The system and the method according to the invention will now be described in more detail with regard to the accompanying figures. The figures show one way of implementing the present invention and are not to be construed as being limiting to other possible embodiments falling within the scope of the attached claim set.
Figure 1 shows a drawing of the system according to some embodiments of one aspect the invention.
Figure 2 is a flow-chart of a method according to some embodiments of one aspect the invention.

### DETAILED DESCRIPTION OF AN EMBODIMENT

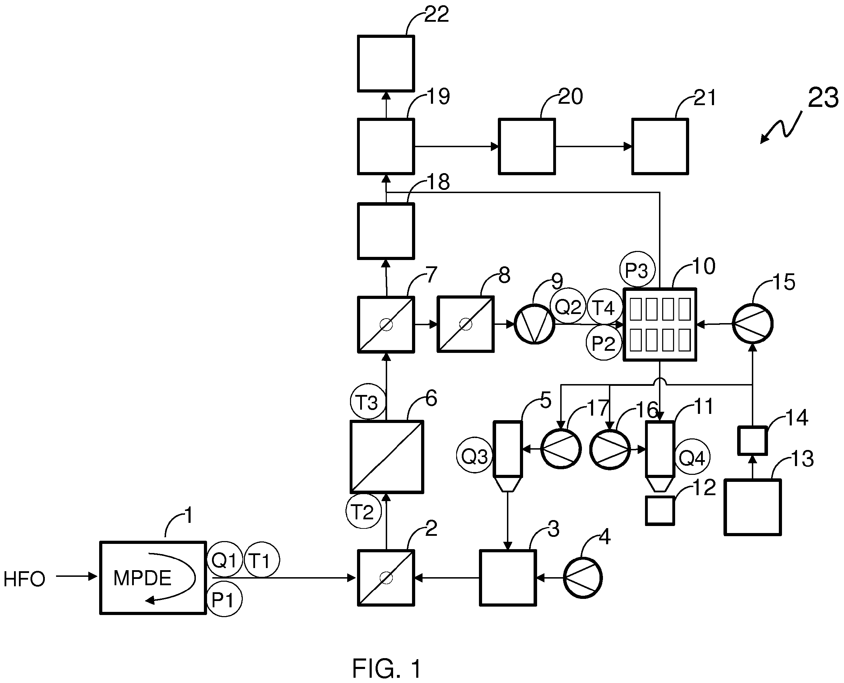

Figure 1 shows a drawing of the emission reduction filtering system (23).

In figure 1, the main propulsion diesel engine (MPDE) (1) operates on heavy fuel oil (HFO) with a sulphur content up to 3.5%. The exhaust gas temperature fluctuates from approximately 320° to approximately 400°, depending on the engine load and pressure required during operation. A temperature sensor (T1), pressure sensor (P1) and gas flow sensor (Q1) are placed after the engine outlet or turbo charger, if present and used. The sensors communicate with the central control system providing information on the temperature, pressure and gas flow at the exhaust outlet of the diesel engine.

The sodium bicarbonate, i.e. NaHCO₃, is injected by the first injection valve (2) after the engine (1) and before the boiler (6), since sodium bicarbonate requires a specific reaction time at temperatures above 150 °C. The sodium bicarbonate is stored in a silo or in a container (5). When in operation, the sodium bicarbonate is transferred into a day tank (3) and injected via a dosing unit (4) into the exhaust gas. Temperature sensors are placed before (T2) and after (T3) the boiler that reduces the exhaust gas temperature to around 180° - 230°.

An additional bicarbonate injection point as a second injection valve (8) is installed to be able to pre-coat before operation. The second injection valve (8) may be also used to add additional sodium bicarbonate if needed. The temperature of the exhaust gas must not exceed 190°, before entering into the filer units (10).

A quench (9) is installed to adjust the temperature to a maximum 190° if needed. A gas flow sensor (Q2) a temperature sensor (T4) and a pressure sensor (P2) are installed before the filter units (10) so as to evaluate which actions may be necessary before the exhaust gas enters the filtering unit.

The chemical reactions between sodium bicarbonate and exhaust gas take place in the injection area (2) and on the filter surface in the filter unit (10). Upon reaction, in the filter unit, a filter cake comprising residue, soot, particles and reacted SOₓ is formed. When the predefined back pressure level reaches a certain limit measured by the pressure sensor (P3), filter units and cartridges are cleaned by a burst of compressed air and the filter cake is peeled off the filter cartridges and drops into a collection funnel and stored in a silo or in a container (11).

At the entrance to the filter unit (10), the exhaust gas is led through a cyclone separator, which disposes of larger particles directly into the waste shoot. Within this first part of the filter unit, the speed of the exhaust gas is reduced dramatically, by opening up the space leading to the filter cartridges. The filter cartridges accumulate the particles from the sulphur-bicarb reaction as well as all the other particle matter on its surface and create the filter cake.

The filter unit is protected with insulation to prevent condensation when the equipment is not in use and also to reduce noise.

During operation and due to the ships movement and the humidity at sea, the sodium bicarbonate can solidify and be difficult to move. In order to be able to empty the bicarbonate silo (5) and the residue storage (11), each silo is fitted with pneumatic hammers and pulse jet air valves (16, 17). The residue container (11) has been enhanced with crew conveyor (12) to ensure the residue container can be emptied.

After the exhaust gas has been cleaned, it is passes though the silencer (18) to further reduce sound and to a class approved SOₓ measuring system (19) for release in the environment.

As there are different regulations depending on where the ship is sailing, the central control box (21) receives GPS coordinates (20) to determine the optimal mode of operation.

To ascertain that the cartridges do not clog up under operations and continuous use, the modular system will take individual modules out of the exhaust gas stream, engine load permitting, and clean them thoroughly in a cool down phase without a gas stream that may blow smaller particles back onto the filter surface. This measure prolongs the cartridge lifespan and optimizes the use of NaHCO₃.

Clean and dry pressured air via the adsorption dryer (14) can be sourced from the vessel directly or alternatively from an additional compressor unit (13).

Cleaning is necessary to maintain a sodium bicarbonate coating at all times and to avoid a too large residue cake. A large residue cake will eventually cause backpressure that again can cause damages to the engine. If all filter cartridges are cleaned at the same time, the system will not be able to remove all SOₓ.

The back pressure of the filter units is set in accordance with all other components installed after the engine and typically in consideration of the fuel penalty free maxima set by engine manufacturers. The filter units is usually set to begin cleansing operations at 500-800 PA.

The emission reduction filtering system have been able to remove more than 99% of all particles having between 10 and 240 nanometre in size from diesel engine exhaust gas.

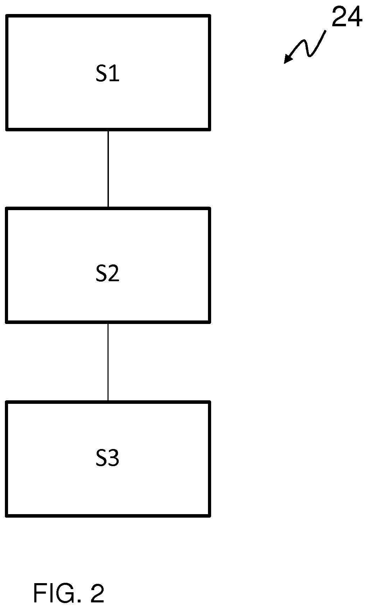

Figure 2 is a flow-chart of a method according to some embodiments of one aspect the invention.

The method of operating the emission reduction filtering system (24) according to the first aspect of the invention, may comprises:
- (S1) activating the bypass valve so as to direct the exhaust gas towards the exhaust stack;
- (S2) injecting the alkaline compounds into the filtering unit through the second injection valve, thereby coating the filtering unit cartridge with the alkaline compounds;
- (S3) closing the bypass valve so as to re-direct the exhaust gas towards the regenerated filtering unit.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### LIST OF REFERENCE SIGNS

- 1.: MPDE: Main Propulsion Diesel Engine;
- 2.: Injection valve for NaHCO₃;
- 3.: Day tank;
- 4.: Dosing unit;
- 5.: NaHCO₃ Silo/container;
- 6.: Economizer/boiler;
- 7.: By pass;
- 8.: Pre-coat injection valve for NaHCO₃;
- 9.: Quench;
- 10.: Filter units;
- 11.: Residue silo/container;
- 12.: Residue screw conveyor;
- 13.: Air compressor;
- 14.: Air dryer;
- 15.: Filter cleaning system;
- 16.: Residue pneumatic hammers and pulse jet valves;
- 17.: NaHCO₃ pneumatic hammers and pulse jet valves;
- 18.: Silencer;
- 19.: SOₓ measuring system;
- 20.: GPS and communication module;
- 21.: Central control system;
- 22.: Exhaust stack.

- Q1: Gas flow measure after engine;
- Q2: Gas flow measure after fan;
- Q3: NaHCO₃ measure;
- Q4: Residue measure.

- P1: Pressure gage after engine;
- P2: Pressure gage before filter units;
- P3: Pressure gage in filter units.

- T1: Temperature sensor after engine;
- T2: Temperature sensor before boiler;
- T3: Temperature sensor after boiler;
- T4: Temperature sensor before filter units.

## Claims

1. An emission reduction filtering system for maritime use, said system comprising:
- an infusion system, such as a dynamic infusion system;
- one or more sensors;
- a controller;
- a filtering unit;
wherein said infusion system comprises at least two injection means for injecting one or more alkaline compounds.

2. An emission reduction filtering system according to claim 1, wherein said one or more alkaline compounds comprise NaHCO₃.

3. An emission reduction filtering system according to any of the preceding claims, wherein said at least two injection means comprise a first injection valve and a second injection valve and wherein said first injection valve is located at an exhaust outlet of a diesel engine and wherein said second injection valve is located before said filtering unit.

4. An emission reduction filtering system according to claim 3, wherein said second injection valve is configured to expose said filtering unit to said one or more alkaline compounds.

5. An emission reduction filtering system according to any of the preceding claims 3-4, further comprising a boiler located between said first injection valve and said second injection valve.

6. An emission reduction filtering system according to any of the preceding claims 3-5, further comprising a bypass valve between said boiler and said second injection valve.

7. An emission reduction filtering system according to any of the preceding claims, wherein said filtering unit comprises cyclonic separation means, such as a cyclone and filtering cartridges, such as ceramic, cloth or Kevlar based cartridges.

8. An emission reduction filtering system according to any of the preceding claims, wherein said one or more sensors comprise pressure sensors, temperature sensors and gas flow sensors.

9. An emission reduction filtering system according to any of the preceding claims, wherein said filtering unit further comprises insulation means, such as thermal insulation and/or sound insulation materials.

10. An emission reduction filtering system according to any of the preceding claims, further comprising means for avoiding or at least reducing particle aggregation of said one or more alkaline compounds, such as pneumatic hammers or air infusion nozzles.

11. An emission reduction filtering system according to any of the preceding claims 8-10, wherein at least one pressure, temperature and gas flow sensor of said one or more sensors are located at said exhaust of a diesel engine.

12. An emission reduction filtering system according to any of the preceding claims 8-11, wherein at least one pressure, temperature and gas flow sensor of said one or more sensors are located at an inlet of said filtering unit.

13. An emission reduction filtering system according to any of the preceding claims, wherein said controller is adapted to control said first infusion system based on the feedback from said one or more sensors.

14. An emission reduction filtering system according to any of the preceding claims, further comprising a second infusion system for injecting water vapour.

15. Method of operating the emission reduction filtering system according to any of the preceding claims 3-14, said method comprising:
- injecting said alkaline compounds into said filtering unit through said second injection valve, thereby coating said filtering unit cartridges with said alkaline compounds.
